# EUROPÄISCHE PATENTSCHRIFT

(11) **EP 1 191 334 B1**
(45) Veröffentlichungstag und Bekanntmachung des Hinweises auf die Patenterteilung: **27.08.2008**
(21) Anmeldenummer: 01250323.1
(22) Anmeldetag: 13.09.2001
(51) Int. Cl.: G01N 27/49

(54) **Sensor zur Messung von O2 Konzentrationen in Flüssigkeiten**
Sensor for measuring O2 concentrations in liquids
Capteur de mesure de concentrations d'oxygène dans des liquides

(30) Priorität: 25.09.2000 DE 10047708
(43) Veröffentlichungstag der Anmeldung: 27.03.2002
(73) Patentinhaber: Biotechnologie Kempe GmbH, 10557 Berlin (DE)
(72) Erfinder: Kempe, Eberhard, Dipl.-Ing., 10719 Berlin (DE)
(74) Vertreter: Seuss, Thomas

(56) Entgegenhaltungen:
- WO-A-83/04095
- WO-A-96/05509
- DD-A- 301 930
- DE-C- 4 342 787
- US-A- 4 207 161
- US-A- 5 527 444

## Beschreibung

### Gebiet der Erfindung

Die Erfindung betrifft einen Sensor zur Messung von O₂ Konzentrationen in Flüssigkeiten, mit einer Arbeitselektrode, mit einer Gegenelektrode und mit einer Bezugselektrode, wobei die Arbeitselektrode und die Gegenelektrode mit der Flüssigkeit in Kontakt stehen, wobei die Bezugselektrode von der Flüssigkeit über ein Diaphragma abgetrennt ist und wobei die Bezugselektrode eine effektiv an der Arbeitselektrode wirkende Polarisationsspannung mißt und mit einem das Potential zwischen der Arbeitselektrode und der Gegenelektrode regelnden Potentiostat verbunden ist.

### Technologischer Hintergrund und Stand der Technik

Sauerstoff in molekularer Form, in Flüssigkeiten gelöst, ist in vielen chemischen und/oder lebensmitteltechnologischen Prozessen unerwünscht. Beispielsweise in der Halbleiterproduktion oder bei dem Wasser Dampf Kreislauf in Kraftwerken sind sehr niedrige Sauerstoffkonzentrationen aus Reinheits- und/oder Korrosionsschutzgründen erforderlich. In der Lebensmitteltechnologie sind niedrige Sauerstoffgehalte aus Gründen einer guten Haltbarkeit gewünscht. Beispielsweise im Bereich der Bierbereitung darf allenfalls nur sehr wenig Sauerstoff im Endprodukt vorliegen, wenn eine befriedigende Geschmacksstabilität erzielt werden soll. Die genaue Messung und Überwachung von Sauerstoffkonzentrationen ist daher von breiter analytischer Bedeutung.

Aus der Literaturstelle G. Teske, "Weiterentwicklung beider Sauerstoffmessung im Bier", Brauindustrie 3/88, Seiten 260-263 ist ein Sensor des eingangs genannten Aufbaus bekannt. Hierbei handelt es sich um einen mit amperometrischer Messung arbeitenden 3-Elektrodensensor mit einer Arbeitselektrode, einer Gegenelektrode sowie einer Bezugselektrode. Dabei sind die Arbeitselektrode und die Gegenelektrode koaxial zueinander angeordnet und der Zwischenraum zwischen Arbeitselektrode und Gegenelektrode wird von der Flüssigkeit durchströmt. Die Bezugselektrode ist seitlich angeordnet und über ein durch die Bezugselektrode greifendes Diaphragma angeschlossen.

Die grundsätzlichen Funktionen des insofern bekannten Sensors sowie auch eines erfindungsgemäßen Sensors sind wie folgt. Gemessen wird ein elektrischer Strom zwischen der kathodisch polarisierten Arbeitselektrode und der Gegenelektrode, welcher aus der Reduktion von O₂ Molekülen an der Arbeitselektrode resultiert. Es versteht sich, daß auch eine Reduktion von O₃ Molekülen stattfinden kann und die insofern bekannten Sensoren, ebenso wie ein erfindungsgemäßer Sensor, zur Ozon Bestimmung bzw. Gesamtsauerstoffbestimmung (molekular) eingesetzt werden können. Bei der Messung der Stromstärke ist einerseits eine genaue Einstellung des Potentials zwischen Arbeitselektrode und Gegenelektrode wichtig. Andererseits muß eine Bestimmung der Strömungsgeschwindigkeit der Flüssigkeit erfolgen, wenn in strömenden Flüssigkeiten gemessen werden soll, da die erhaltenen Meßwerte auch durch die Dicke der Grenzschicht an der Arbeitselektrode, in welcher der O₂ Transport diffusionskontrolliert ist, bestimmt werden. Die Dicke der Grenzschicht wiederum ist eine Funktion der Strömungsgeschwindigkeit.

Eine Methode zur Bestimmung der Strömungsgeschwindigkeit ist beispielsweise die aus der Praxis bekannte Technik mittels zweier NTC Widerstände. Ein NTC Widerstand wird beheizt und ist in der Strömung der Flüssigkeit angeordnet. Der zweite NTC Widerstand ist ebenfalls in der Flüssigkeit angeordnet, jedoch in einem Bereich ohne oder mit nur geringer Strömung. Der zweite NTC Widerstand dient als Kompensationswiderstand hinsichtlich der Temperatur der Flüssigkeit, während der Spannungsabfall über dem ersten NTC Widerstand (bei Temperaturkompensation) ein Maß für den "Kühlungseffekt" der strömenden Flüssigkeit und insofern auch für die Strömungsgeschwindigkeit ist. Es versteht sich, daß die Menge an Flüssigkeit so hoch ist, daß durch die Beheizung des ersten NTC Widerstandes keine nennenswerte Erhöhung der Temperatur der Flüssigkeit insgesamt erfolgt.

Die Bezugselektrode sorgt in Verbindung mit einem Potentiostaten für die Konstanthaltung der elektrochemischen Bedingungen zwischen der Arbeitselektrode und der Gegenelektrode. Eine geeignete Schaltung ist beispielsweise der Literaturstelle "Handbuch der industriellen Meßtechnik, 6. Auflage, 1994, R. Oldenbourg Verlag, München, Wien, Seite 1102, entnehmbar.

Bei einem Sensor des vorstehenden Standes der Technik ist nachteilig, daß dieser ausladend baut. Aufgrund der Nebeneinanderanordnung der Arbeitselektrode und Gegenelektrode einerseits sowie der Bezugselektrode andererseits entsteht auch störender Aufwand bei der Kontaktierung des Sensors insgesamt. Hinzu kommt, daß ein enges Leitungssystem notwendig wird, welches zu einem relativ hohen Druckabfall und einem beachtlichen Risiko der Verkeimung führt. Die Sterilisierung ist zudem umständlich.

Aus CH - 618 515 A5, WO-96/05509 A1, DD-301 930 A9 und DE-2514997 A1 Sind weitere 3-Elektroden-Anordnungen zur Messung von O₂ Konzentrationen in Flüssigkeiten bekannt.

### Technisches Problem der Erfindung

Der Erfindung liegt das technische Problem zugrunde, einen Sensor des eingangs genannten Aufbaus zu schaffen, welcher kompakt gebaut, ein geringes Verkeimungsrisiko aufweist und einfach sterilisierbar ist.

Das oben erwähnte Problem wird durch einen sensor gemäß Anspruch 1 gelöst.

### Grundzüge der Erfindung

Zur Lösung dieses technischen Problems lehrt die Erfindung, daß die Bezugselektrode, die Arbeitselektrode und die Gegenelektrode coaxial zueinander ausgebildet sind, wobei die Arbeitselektrode und die Gegenelektrode um die Bezugselektrode herum angeordnet sind. Mit anderen Worten ausgedrückt, der Sensor ist im wesentlichen rotationssymmetrisch aufgebaut, wobei die Bezugselektrode das Mittelteil bildet.

Die Flüssigkeit läßt sich unschwer zwischen der Arbeitselektrode und der Gegenelektrode hindurch leiten bzw. an der Arbeitselektrode und der Gegenelektrode entlang leiten und zwar ohne das Erfordernis von längeren Leitungen mit engem Querschnitt. Das System kann vielmehr offen ausgestaltet werden, beispielsweise zylinderförmig, wobei die Flüssigkeit durch zumindest eine praktisch vollflächig offene Stirnfläche des Zylinders strömen kann.

Mit der Erfindung wird zunächst aufgrund der coaxialen Anordnung aller Elektroden eine sehr kompakte Bauform erreicht. Weitere Vorteile sind: geringer Druckabfall, kleinere Gefahr der Verkeimung, einfachere Sterilisierbarkeit, einfachere Herstellbarkeit und geringerer Wartungsaufwand.

Grundsätzlich können die Arbeitselektrode und die Gegenelektrode, in radialer Richtung gesehen, beliebig aufeinander folgen. Bevorzugt ist es, wenn die Gegenelektrode um die Arbeitselektrode herum angeordnet ist. Die Arbeitselektrode oder die Gegenelektrode kann eine äußere Wandung der Bezugselektrode bilden und insofern damit eine baulich Einheit bilden.

Die Form der Elektroden kann grundsätzlich, bezogen auf deren Querschnitt orthogonal zur Achse, beliebig sein, beispielsweise quadratisch. Aus herstellungstechnischen Gründen ist es allerdings bevorzugt, wenn die Gegenelektrode und/oder die Arbeitselektrode zylindermantelförmig ausgebildet sind, also einen kreisförmigen Querschnitt aufweisen.

Die Bezugselektrode ist beispielsweise eine Elektrode zweiter Art mit konstantem Eigenpotential, vorzugsweise eine Ag/AgCl-Elektrode. Der Werkstoff der Arbeitselektrode kann Silber oder eine Silberlegierung sein. Der Werkstoff der Gegenelektrode kann ein Edelstahl sein.

An einem Ende der Achse des Sensors können alle elektrischen Kontakte für den Anschluß der Arbeitselektrode, der Gegenelektrode und der Referenzelektrode eingerichtet sein. Hierdurch werden eine einfache Kontaktierbarkeit und eine höhere elektrische Zuverlässigkeit erreicht.

An dem den Kontakten gegenüberliegenden Ende der Achse des Sensors kann eine von der Flüssigkeit durchströmbare Coaxialöffnung, vorzugsweise eine sich über den ganzen Querschnitt des Sensors erstreckende Coaxialöffnung, eingerichtet sein. In der in radialer Richtung äußersten Elektrode kann in Verbindung hiermit eine von der Flüssigkeit durchströmbare Radialöffnung eingerichtet sein. Durch die Radialöffnung kann beispielsweise Flüssigkeit in das Innere des Sensors geleitet werden und die Coaxialöffnung funktioniert dann als Ausströmöffnung. Wenn die elektrischen Kontakte nicht im Bereich eines Endes der Achse des Sensors eingerichtet sind (sondern beispielsweise seitlich bzw. radial), so kann an beiden Enden jeweils eine Coaxialöffnung des vorstehenden Aufbaus eingerichtet sein. Es wird dann ein extrem geringer Strömungswiderstand erreicht.

Zwischen der Gegenelektrode und der Arbeitselektrode, also in dem von der Flüssigkeit durchströmten Zwischenraum des Sensors, kann ein mit der Flüssigkeit in thermischem Kontakt stehender Temperatursensor, vorzugsweise ein NTC-Widerstand, eingerichtet sein. Dieser Temperatursensor kann allein der Messung der Temperatur der Flüssigkeit dienen, beispielsweise im Rahmen einer Temperaturkompensation einer Anordnung zur Messung einer Strömungsgeschwindigkeit, kann aber auch selbst zur Messung der Strömungsgeschwindigkeit durch den Sensor dienen (mit oder ohne externer Temperaturkompensation). Selbstverständlich können auch andere Vorrichtungen zur Messung von Strömungs- geschwindigkeiten eingesetzt werden. Beispiele sind: Druckabfallmessung über eine Normblende, Normdüse oder ein Venturirohr, Schwebekörpermethode, Turbinen-Durchflußmesser, Flügelraddurchflußmesser, Ovalraddurchflußmesser, Ultraschall-Durchflußmesser und Durchflußmessung über die magnetische Induktion.

Von selbstständiger Bedeutung sind die folgend beschriebenen weiteren Ausbildungen. Die dargestellten Zusatzelemente können einerseits eine (externe) Kalibriereinrichtung zur Kalibrierung eines Sensors des vorstehenden Aufbaus darstellen. Das sich ergebende Gesamtkonstrukt kann aber auch als Sensor eingesetzt werden, wobei dann ggf. eine Möglichkeit zur "in situ" Kalibrierung gegeben ist.

An die Coaxialöffnung kann eine Venturidüse angeschlossen sein. Auf der der Coaxialöffnung gegenüberliegenden Seite der Venturidüse eine Durchströmungskammer mit einer vorzugsweise als zweite Radialöffnung ausgebildeten, von der Flüssigkeit durchströmbaren Öffnung angeschlossen sein. Die Durchströmungskammer kann eine Elektrolysezelle umfassen. Im Bereich der Venturidüse kann ein beheizbarer Temperatursensor, vorzugsweise ein NTC-Widerstand, zur Durchflußmessung bzw. Strömungsgeschwindigkeitsmessung eingerichtet sein. Diese kann aber auch beispielsweise über den Druckabfalls bestimmt werden.

Im Folgenden wird die Erfindung anhand von vier Ausführungsbeispiele darstellenden Sensoren näher erläutert. Es zeigen:
- Fig. 1:: eine baulich besonders einfache Ausführungsform des Sensors,
- Fig. 2:: einen Sensor mit Kalibrierungsmöglichkei,
- Fig. 3 und 4:: direkt angeströmte Sensoren in alternativer Ausführungsform zum Sensor nach Fig. 1 und
- Fig. 5:: eine Stirnansicht des Sensors nach Fig. 4.

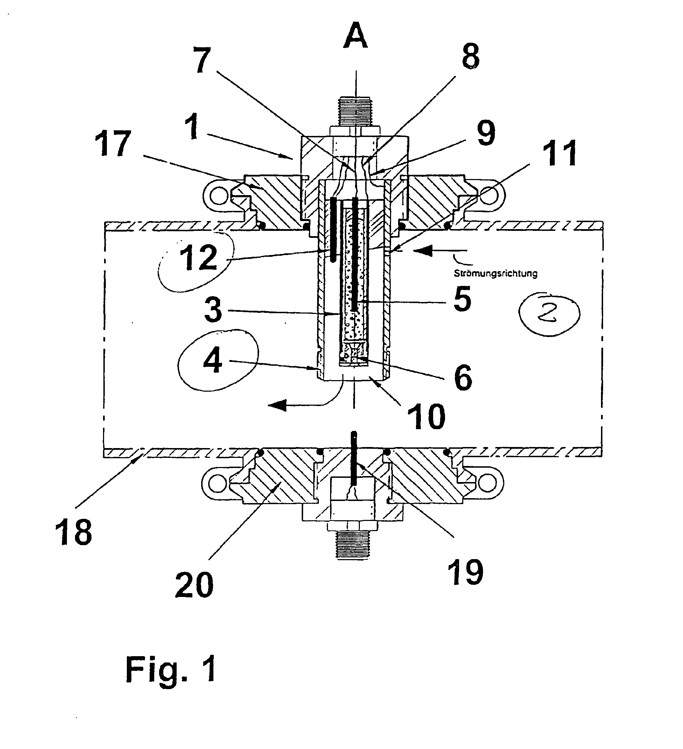

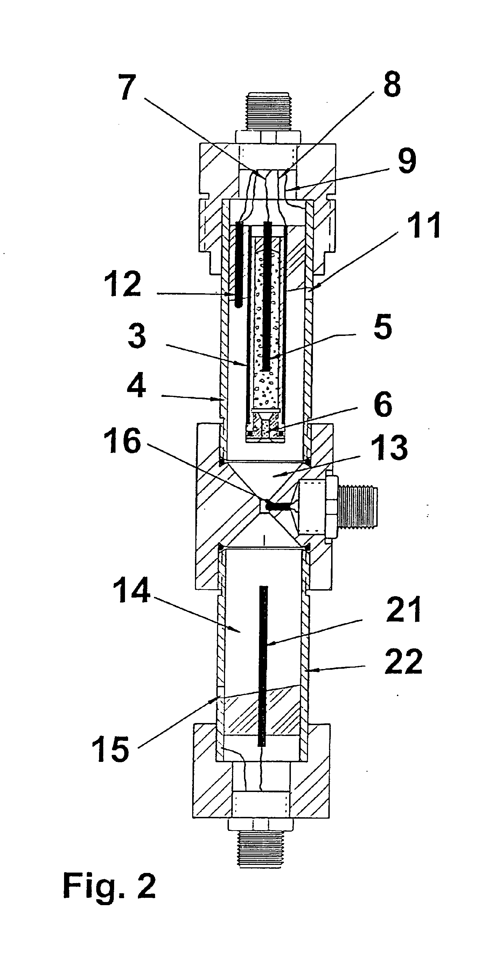

In den beiden Figuren 1 und 2 erkennt man einen Sensor 1 zur Messung von O₂ Konzentrationen in Flüssigkeiten 2, mit einer Arbeitselektrode 3, mit einer Gegenelektrode 4 und mit einer Bezugselektrode 5, wobei die Arbeitselektrode 3 und die Gegenelektrode 4 mit der Flüssigkeit 2 in Kontakt stehen und wobei die Bezugselektrode 5 von der Flüssigkeit 2 über ein Diaphragma 6 abgetrennt ist, wobei die Bezugselektrode 5 eine effektiv an der Arbeitselektrode 3 wirkende Polarisationsspannung mißt und mit einem das Potential zwischen der Arbeitselektrode 3 und der Gegenelektrode 4 regelnden Potentiostat verbunden ist. Die Bezugselektrode 5, die Arbeitselektrode 3 und die Gegenelektrode 4 sind coaxial zueinander ausgebildet, wobei die Arbeitselektrode 3 und die Gegenelektrode 4 um die Bezugselektrode 5 herum angeordnet sind. Dabei ist die Gegenelektrode 4 in Einzelnen um die Arbeitselektrode 3 herum angeordnet. Die Gegenelektrode 4 und die Arbeitselektrode 3 sind zylindermantelförmig ausgebildet.
Die Bezugselektrode 5 ist eine Elektrode zweiter Art mit konstantem Eigenpotential, nämlich eine Ag/AgCl-Elektrode. Der Werkstoff der Arbeitselektrode 3 ist Silber und der Werkstoff der Gegenelektrode 4 Edelstahl. An einem Ende der Achse A des Sensors 1 sind alle elektrischen Kontakte 7,8,9 für den Anschluß der Arbeitselektrode 3, der Gegenelektrode 4 und der Referenzelektrode 5 eingerichtet. An dem den Kontakten 7,8,9 gegenüberliegenden Ende der Achse A des Sensors 1 eine von der Flüssigkeit 2 durchströmbare Coaxialöffnung 10 eingerichtet. In der Gegenelektrode 4 ist eine von der Flüssigkeit 2 durchströmbare Radialöffnung 11 eingerichtet. Zwischen der Gegenelektrode 4 und der Arbeitselektrode 3 ist ein mit der Flüssigkeit 2 in thermischem Kontakt stehender Temperatursensor 12, nämlich ein NTC-Widerstand, eingerichtet. Dabei ist dessen Anordnung so getroffen, daß der NTC-Widerstand in einem Teilbereich des Zwischenraumes zwischen Arbeitselektrode 3 und Gegenelektrode 4 eingerichtet ist, in welchem praktisch keine Strömung der Flüssigkeit stattfindet. Dieser NTC-Widerstand dient der Messung der Temperatur der Flüssigkeit bzw. der Temperaturkompensation im Rahmen von Maßnahmen zur Messung der Strömungsgeschwindigkeit.

In der Fig. 1 ist weiterhin erkennbar, daß der Sensor 1 über einen Flansch in eine Rohrleitung 18 eingebaut ist. Dabei ist die Orientierung so getroffen, daß die Achse A des Sensors 1 orthogonal zur Strömungsrichtung der Flüssigkeit 2 steht. In der Rohrleitung 18 strömt die Flüssigkeit 2 von rechts nach links. Die Radialöffnung 11 wird daher angeströmt und die Flüssigkeit 2 tritt hierdurch in das Innere des Sensors 1, nämlich zwischen die Arbeitselektrode 3 und die Gegenelektrode 4, ein. Aufgrund des Anströmdruckes der Flüssigkeit 2 wird eine Teilmenge der Flüssigkeit 2 auf diese Weise durch den Sensor 1 hindurch transportiert und tritt durch die Axialöffnung 10 wieder aus. Die Axialöffnung 10 ist hinsichtlich ihres Querschnittes parallel zur Strömungsrichtung der Flüssigkeit 2 ausgerichtet. Weiterhin erkennt man einen weiteren NTC-Widerstand 19, welcher über einen weiteren Flansch 20 in die Rohrleitung 18 eingebaut ist. Zumindest ein Teil des NTC-Widerstandes 19 taucht dabei in die strömende Flüssigkeit neben dem Sensor 1 bzw. abseits des Sensors 1 ein. Dieser NTC-Widerstand 19 wird beheizt und dient der Bestimmung der Strömungsgeschwindigkeit. Zwar wird durch diese Anordnung nicht unmittelbar die Strömungsgeschwindigkeit in dem Sensor 1 erfaßt, sondern vielmehr die Strömungsgeschwindigkeit in der Rohrleitung 18. Letztere steht jedoch aufgrund der fixen Anordnung des Sensors 1 in einem definierten mathematischen Zusammenhang mit der Strömungsgeschwindigkeit durch den Sensor 1, da der Strömungswiderstand durch den Sensor 1 unter verschiedenen einsatztypischen hydrodynamischen Bedingungen praktisch unverändert bleibt.

Die Figur 2 zeigt eine Weiterbildung, welche zur Kalibrierung eines ausgebauten Sensors 1 entsprechend der Figur 1 benutzt werden kann, welche aber auch beispielsweise im Rahmen eines Bypass zu einer Rohrleitung 18 insgesamt als Sensor 1, und zwar in situ kalibrierbar, eingesetzt werden kann. Dabei ist an die Coaxialöffnung 10 eine Venturidüse 13 angeschlossen. Auf der der Coaxialöffnung 10 gegenüberliegenden Seite der Venturidüse 13 ist eine Durchströmungskammer 14 mit einer vorzugsweise als zweite Radialöffnung 15 ausgebildeten, von der Flüssigkeit 2 durchströmbaren Öffnung 15 angeschlossen. Die Durchströmungskammer 14 ist dabei als eine Elektrolysezelle ausgebildet mit einer Abscheideelektrode 21 und einer Gegenelektrode 22. An der Abscheideelektrode 21 kann durch Anlegen einer Spannung zwischen der Abscheideelektrode 21 und der Gegenelektrode 22 durch Wasserelektrolyse molekularer Sauerstoff abgeschieden werden. Die Gegenelektrode 22 ist galvanisch von der Gegenelektrode 4 getrennt, beispielsweise durch Ausbildung der Venturidüse 13 aus einem vorzugsweise hochtemperaturfesten (100 °C, besser 120 °C oder mehr) Polymerwerkstoff (beispielsweise PE, PP, PC oder PET). Im Bereich der Venturidüse 13 ist ein beheizbarer NTC-Widerstand 16 eingerichtet.

Die Sonde gemäß der Figur 2 wird im Normalbetrieb so angeschlossen, daß die Radialöffnung 15 eine Einlaßöffnung und die Radialöffnung 11 eine Auslaßöffnung ist. Im Normalbetrieb sind die Abscheidelektrode 21 und die Gegenelektrode 22 potentiallos, i.e. es wird kein Sauerstoff abgeschieden. Die Flüssigkeit strömt durch die Elektrolysezelle bzw. Durchströmungkammer 14 sowie die Venturidüse in den Bereich zwischen Arbeitselektrode 3 und Gegenelektrode 4, wo auf vorstehend beschreibene Weise der Sauerstoffgehalt bestimmt wird. Dabei dient der NTC-Widerstand 16 der Bestimmung der Strömungsgeschwindigkeit. Wenn eine Kalibrierung durchgeführt werden soll, so kann dies, konstanter Sauerstoffgehalt in der Flüssigkeit angenommen, ohne irgendwelche Unterbrechung oder Ausbau erfolgen, nämlich indem lediglich eine geeignete Elektrolysespannung an der Abscheidelektrode angelegt wird. Aus der dabei fließenden Stromstärke kann die Bildungsrate von molekularem Sauerstoff ermittelt werden, welche in Verbindung mit der Strömungsgeschwindigkeit die sich einstellende und um ein definiertes Maß erhöhte Sauerstoffkonzentration in der die Anordnung durchströmenden Flüssigkeit 2 bestimmt. Dabei ist im Zusammenhang mit der Venturidüse 13 besonders vorteilhaft, daß eine praktisch homogene Durchmischung der Flüssigkeit 2 mit dem gebildeten Sauerstoff erfolgt, und zwar ohne das Erfordernis aufwendiger und schwer sterilisierbarer Mischer. Aus der Erhöhung der an der Arbeitselektrode 3 gemessenen Werte in Verbindung mit der Stromstärke an der Abscheideelektrode 21 können die erforderlichen Kalibrierungsparameter bestimmt und eingestellt werden. Danach wird die Abscheideelektrode 21 wieder potentiallos geschaltet.

Ein erfindungsgemäßer Sensor 1 ist zweckmäßigerweise hinsichtlich der Auswahl verwendeter Werkstoffe so ausgebildet, daß eine Dampfsterilisierung bei beispielsweise 120 °C und höher schadlos ohne Demontagemaßnahmen durchgeführt werden kann.

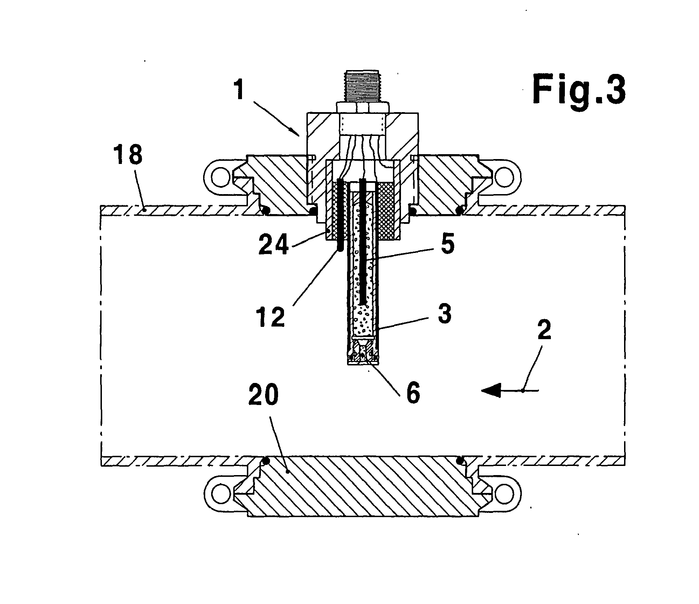

In der in Fig. 3 dargestellten Ausführungsform des Sensors 1 nach Fig.1 ist die Gegenelektrode 24 wesentlich kürzer als die Gegenelektrode 4 nach Fig. 1 ausgebildet, wohingegen die Arbeitselektrode 3, die Bezugselektrode 5, das Diaphragma 6 und der NTC-Temperatursensor 12 in gleicher Länge wie beim Sensor nach Fig. 1 vorhanden sind. Der gegenüberliegende NTC-Widerstand 19 nach Fig. 1 ist bei der Ausführungsform des Sensors nach Fig. 3 nicht vorhanden.

Aufgrund der verkürzten Ausbildung der Gegenelektrode 24 wird die Arbeitselektrode 3 fast in voller Länge von der Strömung der Flüssigkeit 2 in der Rohrleitung 18 unmittelbar umströmt,daß der beim Sensor 1 nach Fig. 1 vorhandene Ringraum zwischen der langen Gegenelektrode 4 und der Arbeitselektrode 3 entfällt. Es besteht somit bei der Ausführungsform des Sensors 1 nach Fig. 3 mit verkürzter Gegenelektrode 24 nicht mehr die Gefahr einer Verkeimung im Durchströmungsraum innerhalb der relativ langen, mit der Radialöffnung 11 versehenen Gegenelektrode 4 des Sensors 1 nach Fig. 1.

Das Fehlen des zweiten NTC-Widerstands 19 beim Sensor 1 nach Fig. 3 erfordert eine andere Durchflußmeßmethode gegenüber derjenigen nach Fig. 1.

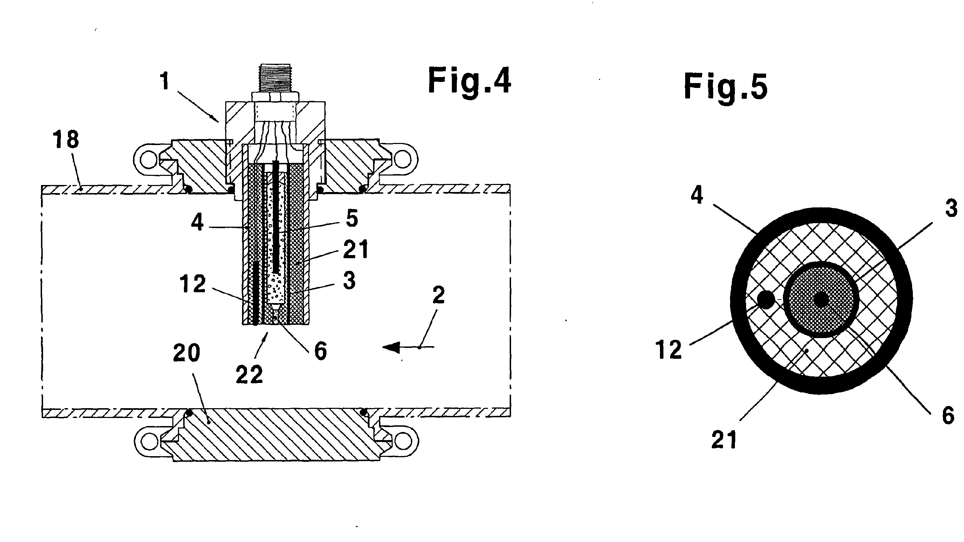

In der weiteren Ausführungsform des Sensors 1 nach Fig. 4 und 5, die ebenfalls eine alternative Ausführungsform zum Sensor 1 nach Fig. 1 zeigen, enden die zylindermantelförmig ausgebildete Arbeitselektrode 3 und die ebenfalls zylindermantelförmig ausgebildete Gegenelektrode 4 sowie das Diaphragma 6 und der NTC-Temperatursensor 12 bündig in einer gemeinsamen Stirnfläche 22 des Sensors 1, wobei der ringförmige Zwischenraum 21 zwischen der Arbeitselektrode 3 und der Gegenelektrode 4 mit einem Kunststoff verfüllt ist. Die Stirnfläche 22 bildet somit die aktive Elektrodenfläche an der Frontfläche des Sensors 1, wie es in Fig. 5 in Stirnansicht dargestellt ist. Die Strömung der Flüssigkeit 2 in der Rohrleitung 18 benetzt somit nur die Stirnfläche 22 als gemeinsame Endfläche von Arbeitselektrode 3, Gegenelektrode 4, Diaphragma 6 und NTC-Temperatursensor 12. Hierbei ist die aktive, von der Flüssigkeit 2 umströmte Fläche des Sensors 1 wesentlich kleiner als bei den Ausführungsformen des Sensors 1 nach Fig. 1 und Fig. 3.

Auch in dieser Ausführungsform fehlt der gegenüberliegende zweite NTC-Widerstand 19, sodaß auch hier eine andere Durchflußmeßmethode als beim Sensor nach Fig. 1. angewendet werden muss.

## Patentansprüche

1. Sensor (1) zur Messung von O₂ Konzentrationen in Flüssigkeiten (2), mit einer Arbeitselektrode (3), mit einer Gegenelektrode (4) und mit einer Bezugselektrode (5), ferner mit Kontakten (7,8,9) an einem Eude des Sensors für den Anschluß der Elektroden,
wobei die Arbeitselektrode (3) und die Gegenelektrode (4) mit der Flüssigkeit (2) in Kontakt stehen,
wobei die Bezugselektrode (5) von der Flüssigkeit (2) über ein Diaphragma (6) abgetrennt ist,
wobei die Bezugselektrode (5) eine effektiv an der Arbeitselektrode (3) wirkende Polarisationsspannung mißt und mit einem das Potential zwischen der Arbeitselektrode (3) und der Gegenelektrode (4) regelnden Potentiostat verbunden ist,
wobei,die Bezugselektrode (5), die Arbeitselektrode (3) und die Gegenelektrode (4) coaxial zueinander ausgebildet sind,
wobei die Arbeitselektrode (3) und die Gegenelektrode (4) um die Bezugselektrode (5) herum angeordnet sind, **dadurch gekennzeichnet, daß** an dem den Kontakten (7,8,9) in axialer Richtung gegenüberliegenden Ende des Sensors (1) eine von der Flüssigkeit (2) durchströmbare Coaxialöffnung (10) eingerichtet ist,
und in der in radialer Richtung äußersten Elektrode (4) eine von der Flüssigkeit (2) durchströmbare Radialöffnung (11) eingerichtet ist.

2. Sensor (1) nach Anspruch 1, **dadurch gekennzeichnet, daß** die Gegenelektrode (4) um die Arbeitselektrode (3) herum angeordnet ist.

3. Sensor (1) nach Anspruch 1 oder 2, **dadurch gekennzeichnet, daß** die Gegenelektrode (4) und/oder die Arbeitselektrode (3) zylindermantelförmig ausgebildet sind.

4. Sensor (1) nach einem der Ansprüche 1 bis 3, **dadurch gekennzeichnet, daß** die Bezugselektrode (5) eine Elektrode zweiter Art mit konstantem Eigenpotential, vorzugsweise eine Ag/AgCl-Elektrode, ist.

5. Sensor (1) nach einem der Ansprüche 1 bis 4, **dadurch gekennzeichnet, daß** der Werkstoff der Arbeitselektrode (3) Silber ist, und/oder daß der Werkstoff der Gegenelektrode (4) Edelstahl ist.

6. Sensor (1) nach einem der Ansprüche 1 bis 5, **dadurch gekennzeichnet, daß** an einem Ende der Achse (A) des Sensors (1) alle Kontakte (7,8,9) für den Anschluß der Arbeitselektrode (3), der Gegenelektrode (4) und der Referenzelektrode (5) eingerichtet sind.

7. Sensor (1) nach einem der Ansprüche 1 bis 6, **dadurch gekennzeichnet, daß** zwischen der Gegenelektrode (4) und der Arbeitselektrode (3) ein mit der Flüssigkeit (2) in thermischem Kontakt stehender Temperatursensor (12), vorzugsweise ein NTC-Widerstand, eingerichtet ist.

8. Sensor (1) nach einem der Ansprüche 1 bis 7, **dadurch gekennzeichnet, daß** an die Coaxialöffnung (10) eine Venturidüse (13) angeschlossen ist.

9. Sensor (1) nach Anspruch 8, **dadurch gekennzeichnet, daß** auf der der Coaxialöffnung (10) gegenüberliegenden Seite der Venturidüse (13) eine Durchströmungskammer (14) mit einer vorzugsweise als zweite Radialöffnung (15) ausgebildeten, von der Flüssigkeit (2) durchströmbaren Öffnung (15) angeschlossen ist.

10. Sensor (1) nach Anspruch 9, **dadurch gekennzeichnet, daß** die Durchströmungskammer (14) eine Elektrolysezelle umfaßt.

11. Sensor (1) nach einem der Ansprüche 8 bis 10, **dadurch gekennzeichnet, daß** im Bereich der Venturidüse (13) ein beheizbarer Temperatursensor (16), vorzugsweise ein NTC-Widerstand, eingerichtet ist.

12. Sensor (1) nach einem oder mehreren der Ansprüche 1 bis 6, **dadurch gekennzeichnet, daß** die axiale Länge der Gegenelektrode (24) kürzer ist als die axiale Länge der Arbeitselektrode (3), so daß die Arbeitselektrode (3) unmittelbar von der Flüssigkeit (2) innerhalb einer Rohrleitung (18) umströmt ist.

13. Sensor (1) nach einem oder mehreren der Ansprüche 1 bis 6, **dadurch gekennzeichnet, daß** die Arbeitselektrode (3), die Gegenelektrode (4), das Diaphragma (6) und der Temperatursensor (12) bündig in der Stirnfläche (22)des Sensors (1) enden, wobei der ringförmige Zwischenraum (21) zwischen der Gegenelektrode (4) und der Arbeitselektrode (3) durch einen Kunststoff verfüllt ist.

## Claims

1. A sensor (1) for measuring O₂ concentrations in liquids (2), comprising a working electrode (3), a counter electrode (4) and a reference electrode (5), further comprising contacts (7, 8, 9) for the connection of the electrodes at one end of the sensor,
wherein the working electrode (3) and the counter electrode (4) are in contact with the liquid (2),
wherein the reference electrode (5) is separated from the liquid (2) by a diaphragm (6),
wherein the reference electrode (5) measures a polarization voltage effectively acting at the working electrode (3) and is connected with a potentiostat controlling the potential between the working electrode (3) and the counter electrode (4),
wherein the reference electrode (5), the working electrode (3) and the counter electrode (4) are coaxially joined together,
wherein the working electrode (3) and the counter electrode (4) are arranged around the reference electrode (5),
**characterized by**
that at the end of the sensor (1) being axially opposite to the contacts (7, 8, 9), a coaxial opening (10) to be passed by the liquid (2) is provided, and
that in the radially outermost electrode (4), a radial opening (11) to be passed by the liquid (2) is provided.

2. The sensor (1) according to claim 1, **characterized by** that the counter electrode (4) is arranged around the working electrode (3).

3. The sensor (1) according to claim 1 or 2, **characterized by** that the counter electrode (4) and/or the working electrode (3) are formed as a cylindrical casing.

4. The sensor (1) according to one of claims 1 to 3, **characterized by** that the reference electrode (5) is an electrode of the second kind with constant self-potential, preferably an Ag/AgCl electrode.

5. The sensor (1) according to one of claims 1 to 4, **characterized by** that the material of the working electrode (3) is silver, and/or that the material of the counter electrode (4) is stainless steel.

6. The sensor (1) according to one of claims 1 to 5, **characterized by** that all contacts (7, 8, 9) for the connection of the working electrode (3), of the counter electrode (4) and of the reference electrode (5) are installed on one end of the axis (A) of the sensor (1).

7. The sensor (1) according to one of claims 1 to 6, **characterized by** that a temperature sensor (12) being in thermal contact with the liquid (2), preferably an NTC resistor, is installed between the counter electrode (4) and the working electrode (3).

8. The sensor (1) according to one of claims 1 to 7, **characterized by** that a Venturi nozzle (13) is connected to the coaxial opening (10).

9. The sensor (1) according to claim 8, **characterized by** that a flow chamber (14) comprising an opening (15) preferably adapted as a second radial opening (15) to be passed by the liquid (2) is connected at the side of the Venturi nozzle (13) being opposite to the coaxial opening (10).

10. The sensor (1) according to claim 9, **characterized by** that the flow chamber (14) comprises an electrolysis cell.

11. The sensor (1) according to one of claims 8 to 10, **characterized by** that a heatable temperature sensor (16), preferably an NTC resistor, is installed in the area of the Venturi nozzle (13).

12. The sensor (1) according to one or several of claims 1 to 6, **characterized by** that the axial length of the counter electroce (24) is smaller than the axial length of the working electrode (3), so that the liquid (2) immediately flows around the working electrode (3) within a conduit (18).

13. The sensor (1) according to one or several of claims 1 to 6, **characterized by** that the working electrode (3), the counter electrode (4), the diaphragm (6) and the temperature sensor (12) are flush with the front face (22) of the sensor (1), and the annular intermediate space (21) between the counter electrode (4) and the working electrode (3) is filled in with a plastic material.

## Revendications

1. Capteur (1) de mesure de concentrations d' O₂ dans des liquides (2), comprenant une électrode active (3), une contre-électrode (4) et une électrode de référence (5), en outre comprenant des contacts (7, 8, 9) pour la connexion des électrodes à une extrémité du capteur,
dans lequel l'électrode active (3) et la contre-électrode (4) sont en contact avec le liquide (2),
dans lequel l'électrode de référence (5) est séparée du liquide (2) par un diaphragme (6),
dans lequel l'électrode de référence (5) mesure une tension de polarisation effectivement agissant à l'électrode active (3) et est liée avec un potentiostat commandant le potentiel entre l'électrode active (3) et la contre-électrode (4),
dans lequel l'électrode de référence (5), l'électrode active (3) et la contre-électrode (4) sont coaxialement liées l'une à l'autre,
dans lequel l'électrode active (3) et la contre-électrode (4) sont arrangées autour de l'électrode de référence (5),
**caractérisé en ce**
**qu'**à l'extrémité du capteur (1) axialement opposée aux contacts (7, 8, 9), une ouverture coaxiale (10) à être passée par le liquide (2) est prévue, et
**que** dans l'électrode (4) radialement la a plus éloignée, une ouverture radiale (11) à être passée par le liquide (2) est prévue.

2. Capteur (1) selon la revendication 1, **caractérisé en ce que** la contre-électrode (4) est arrangée autour de l'électrode active (3).

3. Capteur (1) selon la revendication 1 ou 2, **caractérisé en ce que** la contre-électrode (4) et/ou l'électrode active (3) sont formées comme une enveloppe cylindrique.

4. Capteur (1) selon une des revendications 1 à 3, **caractérisé en ce que** l'électrode de référence (5) est une électrode de deuxième espèce avec un potentiel spontané constant, de préférence une électrode Ag/AgCl.

5. Capteur (1) selon une des revendications 1 à 4, **caractérisé en ce que** la matière de l'électrode active (3) est l'argent, et/ou que la matière de la contre-électrode (4) est l'acier inoxydable.

6. Capteur (1) selon une des revendications 1 à 5, **caractérisé en ce que** tous les contacts (7, 8, 9) pour la connexion de l'électrode active (3), de la contre-électrode (4) et de l'électrode de référence (5) sont installés à une extrémité de l'axe (A) du capteur (1).

7. Capteur (1) selon une des revendications 1 à 6, **caractérisé en ce qu'**un capteur de température (12) étant en contact thermique avec le liquide (2), de préférence une résistance NTC, est installé entre la contre-électrode (4) et l'électrode active (3).

8. Capteur (1) selon une des revendications 1 à 7, **caractérisé en ce qu'**une buse Venturi (13) est liée à l'ouverture coaxiale (10).

9. Capteur (1) selon la revendication 8, **caractérisé en ce qu'**une chambre d'écoulement (14) comprenant une ouverture (15) de préférence agencée comme une deuxième ouverture radiale (15) à être passée par le liquide (2) est liée au côté de la buse Venturi (13) opposé à l'ouverture coaxiale (10).

10. Capteur (1) selon la revendication 9, **caractérisé en ce que** la chambre d'écoulement (14) comprend une cellule d'électrolyse.

11. Capteur (1) selon une des revendications 8 à 10, **caractérisé en ce qu'**un capteur de température (16) chauffé, de préférence une résistance NTC, est installé dans la région de la buse Venturi (13).

12. Capteur (1) selon une ou plusieurs des revendications 1 à 6, **caractérisé en ce que** la longueur axiale de la contre-électrode (24) est inférieure à la longueur axiale de l'électrode active (3), de sorte que le liquide (2) immédiatement s'écoule autour de l'électrode active (3) au-dedans d'une conduite (18).

13. Capteur (1) selon une ou plusieurs des revendications 1 à 6, **caractérisé en ce que** l'électrode active (3), la contre-électrode (4), le diaphragme (6) et le capteur de température (12) sont à fleur avec la face frontale (22) du capteur (1), et l'espace intermédiaire annulaire (21) entre la contre-électrode (4) et l'électrode active (3) est remplie d'une matière plastique.
